# EUROPEAN PATENT APPLICATION

(11) **EP 1 445 818 A1**
(43) Date of publication of application: **11.08.2004**
(21) Application number: 01982065.3
(22) Date of filing: 09.08.2001
(51) Int. Cl.: H01M 10/10, H01M 10/12

(54) **A LIQUID LOW-SODIUM SILICATE FORMING-SOLUTION USED FOR A STORAGE BATTERY, AND A CONTAINER FORMATION METHOD**

(30) Priority: 12.06.2001 CN 01129343
(71) Applicant: Feng, Yuesheng, Guangdong 510022 (CN)
(72) Inventor: FENG, Yuesheng, Guangdong 510022 (CN); HAN, Dian, Guangdong 510022 (CN); FENG, Yifeng, Guangdong 510022 (CN)
(74) Representative: Loven, Keith James
(86) International application number: PCT/CN2001/001223
(87) International publication number: WO 2002/101867

(57) **Abstract**

Present invention is related to a liquid low concentration sodium-containing silicate solution as the activation solution for lead-acid storage batteries and an internal activation method. Such an activation solution is prepared by mixing a silica gel containing 40 to 60 wt% SiO₂, the weight units of such a silica gel are 5-15, with 15-25 weight units of water. Adjusting the pH value of this mixture to 1-4 using inorganic acid and magnetizing the mixture in 1000-6000 Gauss magnetic field for 5-10 minutes, and finally obtains a liquid low concentration sodium-containing silicate solution with a viscosity less than 0.02 poise. Fill this activation solution into battery tank and use a charger to activate electrochemically. The operating temperature is room temperature and time is 30-50 hours. Using such an activation solution and procedures described above can avoid the releasing of acid smog and serious environmental pollution and healthy hazard for workers. Attributed to liquid state and good fluidity of the activation solution and not producing heat during activation, the battery as made can be activated within a short time and the rate performance can be improved to 25-30 C.

## Description

### FIELD OF THE INVENTION

Present invention is related to an activation technology for lead-acid storage batteries, especially related to a low concentration sodium-containing silicate solution as activation solution for lead-acid storage batteries and a method for internal activation.

### BACKGROUND OF THE INVENTION

Activation of lead-acid storage batteries is a necessary and important process for producing lead-acid storage batteries. Activation is performed normally through the following process. Inactivated plates are transformed into activated plates through electrochemical reactions in a sulphuric acid-based electrolyte. Consequently, dry diachylon on the plates turns into activated components, α-PbO₂ and β-PbO₂ are formed on the positive plate and spongy metallic lead is formed on the negative plate. Such a process is called activation. There are mainly two types of methods for activation of the plates of lead-acid batteries: tank formation (block box formation) and container formation. Both methods use the activation solution containing sulphuric acid and water (sulphuric acid is the main component). Activation also includes welding, rinsing and electrochemical activation steps. During these activation processes, a large amount of acid smog is released and serious pollution is caused by and it is very harmful to operators. On the other hand, such an activation method using sulphuric acid has obvious disadvantages, such as very complicated processes, hard work, long activation time, low activation efficiency and low capacity of the batteries.

### SUMMARY OF THE INVENTION

The object of the present invention is to overcome the drawbacks of using sulphuric acid based activation solution, in order to solve existed problems thoroughly, such as environment pollution and healthy issue. Based on present invention, using a low concentration sodium-containing silicate solution as activation solution for lead-acid storage batteries and a new method for internal activation, the quality of working environment can be improved, the activation time can be shorten, the capacity of the batteries can be increased and the labour intensity can be decreased significantly.

The present invention can be generated as the following: a liquid low concentration sodium-containing silicate solution is provided as activation solution for lead-acid storage batteries; such a solution is obtained by a magnetization technology as the following steps:
1. Take a silica gel containing 40~60 wt% SiO₂, the weight units of such a sol are 5~15;
2. Add water into the silica gel and stir the mixture at the same time, the weight units of water are 15~25. Use a densimeter to measure the concentration, add water until the concentration is 0.65~0.85 Bé (Baumé); the water mentioned here is distilled water or de-ionized water;
3. Add inorganic acid into the above mixture until pH value is 1-4. Inorganic acid mentioned here is hydrochloric acid, oxalic acid and sulphuric acid;
4. Put the mixture obtained in Step 3 into a magnetic field of 1000-6000 Gauss for 5-10 minutes magnetization; the magnetic field as described here is performed through a round tube made from a magnetic material or an ac/dc magnetic field; the magnetic material includes NdFeB, ferrite and other magnetic materials;
5. Stir the magnetized mixture obtained in Step 4, the type of stirring includes manual stirring or mechanical stirring. The speed for mechanical stirring is 700-1400 r/m. Stirring lasts 5-10 minutes until the viscosity of the above mixture is decreased to 0.02 poise.

After these procedures, a liquid low concentration sodium-containing activation solution with a viscosity less than 0.02 mPas is obtained.

The activation solution provided in present invention can be used for common lead-acid storage batteries or specific lead-acid storage batteries, such as deep-sea lead-acid storage batteries.

An new internal activation method using the activation solution provided in present invention includes the following steps:
1. Preparation of the plate: a hexagonal comby plate is made by lead or lead alloy, the size should be matched with the shell of the batteries, the thickness of the positive and negative plate is as same as usual plate, the difference is that the frame part at negative electrode is 20%-60% thicker than the comby part within the frame while the frame part at positive electrode is 30%-80% thicker than the comby part within the frame;
2. Paste diachylon on the plate: the diachylon for present invention is different from usual diachylon or lead alloy diachylon. The composition of the diachylon for the positive plate contains lead powder 100 kg, graphite 500 g, short-fibre paper 50 g, sulphuric acid 12.26 kg (25 °C, d=1.38) and water 14 kg. The density of the diachylon is 4.2 g/cm . Pasting of the diachylon on the positive plate is performed by common method;
   The diachylon for the negative plate of the present invention is composed of lead powder 100 kg, Barium sulphate 500 g, short-fibre paper 50 g, sulphuric acid 8.19 kg (25 °C, d=1.38) and water 14 kg. The density of the diachylon is 4.3 g/cm³. Pasting of the diachylon on the negative plate is performed by common method. The water mentioned above is distilled water or de-ionized water.
3. Put the positive and negative plates obtained in Step 2 into the battery shell. Inside space of the battery shell is separated uniformly into small units by inner wall. Every unit is a 2V cell. Positive and negative plates are placed in alternation; a separator is sandwiched between positive and negative plates. No space is left between neighbour plates. The lead lines for all positive electrodes or negative electrodes are put in one side, respectively. In each cell unit the positive plates or negative plates are connected together in parallel through current collector plates, respectively. Each cell unit is in series with each other through connection junction, the connection of plate, junction and current collector plate are as same as usual. After connection, put a cap on the battery and seal each unit using epoxy resins. Ventilation between each unit should be avoided;
4. Fill the activation solution into each unit, shake the battery steadily to remove the air bubbles during the solution filling and finally let the whole battery inside the shell filled up with the activation solution. In addition, except the lead lines on the plates, the rest parts are immersed in the solution for 12-24 hours until the solution wets the plate and the separator thoroughly. By this way, the activation can be performed completely and no heat is produced;
5. The battery assembled in Step 4 is activated electrochemically using a "uc-KGCFD2 computer control activation charger" or "uc-KGCFD2-economic type 40 channels charger". The operating temperature is at room temperature and the activation time is 30-50 hours, the optimized voltage is 2.2 V.

### Advantages of Present Invention:

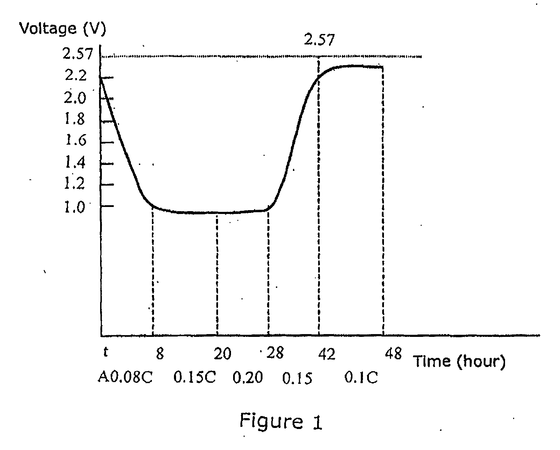

1. The liquid low concentration sodium-containing silicate solution used in the present invention for activation of lead-acid storage batteries, avoids the releasing of acid smog and environmental pollution which is unavoidable in conventional technology and also prevents from healthy hazard to workers.
2. The low concentration sodium-containing silicate solution in the present invention is a liquid activation solution which avoids the problem of current gel-type activation solution. It has good fluidity and do not produce heat during activation. Therefore, activation can be finished in a short time.
3. The thickness of the diachylon used in present invention is different from the thickness of the positive and negative plates, especially; the thickness of the plate frame is thicker than the middle part so that more diachylon can be pasted on the positive and negative plates. Therefore, the amount of active materials is increased significantly. Accordingly, the discharge capability of the lead-acid storage batteries using liquid low concentration sodium-containing silicate solution as activation solution is improved to 25-30 C.
4. Since the liquid low concentration sodium-containing silicate solution described in present invention is used as electrolyte for lead-acid storage batteries, and the internal activation technology is performed in present invention that decreases the complexity of conventional activation technology, decreases the labour intensity, shortens activation time and improves the assembling efficiency.
5. During activation processes using the liquid low concentration sodium-containing silicate solution described in present invention, attributed to longer immersing time and shaking the battery tanks uniformly and continuously, the plates are wetted completely and all air bubbles are removed. Ample electrochemical activation is performed, the batteries do not produce heat during application; the capacity is also increased significantly.
6. The cycle life of the lead-acid storage batteries using the liquid low concentration sodium-containing silicate solution described in present invention is increased up to 1000 cycles; it can be used properly at the range of -50°C to +60°C and the rate performance is increased significantly from common 3-7C to 30C. The self-discharge of the batteries is not obvious, it can be stored for 18 months and the specific energy density is increased to 53W/kg. The discharge/charge curves of the batteries using the liquid low concentration sodium-containing silicate solution described in present invention is shown in Fig. 1.

### BRIEF DESCRIPTION OF THE DRAWINGS

Fig. 1 is the discharge/charge curves of a lead-acid storage battery using the liquid low concentration sodium-containing silicate solution as activation solution described in present invention.
Fig. 2 is the discharge/charge curves of a 12V 12Ah lead-acid storage battery using the liquid low concentration sodium-containing silicate solution described in present invention.

### DESCRIPTION OF THE PREFERRED EMBODIMENTS

### Example 1

The first step is to prepare the liquid low concentration sodium-containing silicate solution as activation solution described in present invention for a 12V 12Ah lead-acid storage battery.
1. Take 5 kg silica gel (commercial product, reagent purity) containing 40 to 60 wt% SiO₂, it corresponds a 5-unit weight.
2. Drop distilled water 15 litres into above silica gel and stir at the same time, until the value read in Baumé densimeter is 0.65 °Bé;
3. Add commercial available 98.3% sulphuric acid into the solution mentioned above until pH value is 1.57, the volume of sulphuric acid is about 2 litres;
4. Put the silicate mixture obtained in the above steps into the centre position of a magnetic field of 4000 Gauss for 8 minutes magnetization to obtain a magnetized mixture, the magnetic field is performed by a 800mm diameter round tube made from NdFeB;
5. Stir the magnetized mixture obtained in the above step mechanically at a speed of 700~1400 r/m until the viscosity of the above mixture is less than 0.02 poise.

By these procedures, the activation solution of a liquid low concentration sodium-containing silicate solution for a 12V12Ah lead-acid storage battery is obtained.

### Example 2

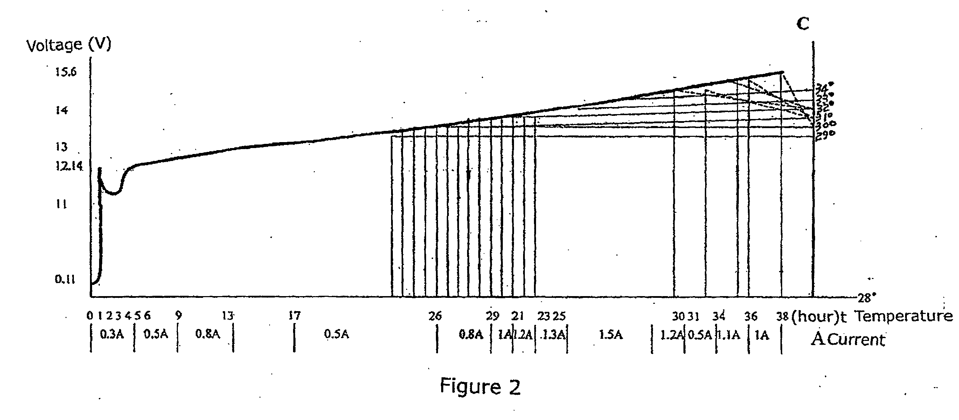

Use the activation solution obtained in Example 1 for an internal activation, the procedures are listed as following:
1. Preparation of plate grid firstly: make a hexagonal comby plate by lead or lead alloy, the size should be matched with the shell of the batteries, the frame part at the negative plate is 60% thicker than the comby part within the frame while the frame part at positive electrode is 80% thicker than the comby part within the frame;
2. Paste diachylon on the positive plate grid by common method, the composition of the diachylon contains lead powder 100 kg, graphite 500 g, short-fiber paper 50 g, sulphuric acid 12.26 kg (25° C> d=1.38) and water 14 kg.
   The density of the diachylon is 4.2 g/cm . Paste the diachylon on the negative plate grid by common method, the composition of the diachylon contains lead powder 100 kg, Barium sulphate 500 g, short-fibre paper 50 g, sulphuric acid 8.19 kg (25° C, d=1.38) and water 14 kg. The density of the diachylon is 4.3 g/cm³;
3. Put the inactivated positive and negative plate grids obtained in Step 2 into the battery shell. Inside space of the battery shell is separated uniformly into small units by inner wall. Every unit is a 2 V cell, totally 6 units. Positive and negative plates are placed in alternation, a separator is sandwiched between positive and negative plates. No space is kept between neighbouring plates. Totally 6 negative plates, 10 separators and 5 positive plates are placed. The lead lines for all positive electrodes or negative electrodes are put in one side, respectively. In each cell unit the positive plates or negative plates are connected together in parallel through current collector plates. Each cell unit is in series with each other through connection junction. After connection, put a cap on the battery and seal each unit using epoxy resins. Ventilation between each unit should be avoided;
4. Fill the activation solution obtained in Example 1 into each unit, shake the battery steadily during the filling in order to remove the air bubbles, the whole battery inside the shell should be filled up with the activation solution. Except the lead lines on the plates, the rest parts are immersed in the solution for 20 hours until the solution wets the plate and separator thoroughly. Thus, the activation process does not produce heat and activation can be performed thoroughly;
5. Use an automatic charger uc-KGCFD2 to perform normal electrochemical activation at room temperature for 48 hours. The optimized voltage is 2.2V. The discharge/charge curves of the 12V 12Ah lead-acid storage battery of this example is shown in Fig.2.

Use the activation solution in Example 1 to activate, after activation, the activation solution plays the role as the electrolyte solution for this lead-acid storage battery, the standard evaluated value for this battery is 100, the power density is 53W/kg, the cycle life of the lead-acid storage batteries is increased up to 1000 cycles, it can be used properly at the range of -50°C to +60°C and the rate performance is increased significantly from common 3-7C to 30C. The self-discharge of the batteries is not obvious, it can be used even after 18 months storage.

### Example 3

The activation solution and activation processes are as same as Example 1 and 2. The differences are: the SiO₂ concentration of silica gel is 60 wt%, take 5 kg of it, add about 20 litres deionised water and stir the mixture at the same time until the value read in Baumé densimeter is .85° Bé, add sulphuric add into the solution mentioned above until pH value is 4. As for magnetization, the magnetic field is 6000 Gauss and the time is 6 minutes. As for the thickness of the plate, the frame part at the negative plate is 30% thicker than the comby part within the frame and the frame part at positive plate is 50% thicker than the comby part within the frame. The immersing time is 12 hours. The activation is performed by an "uc-KGCFD 2 economic-type 40 channels charger" for 35 hours at 2.2V at room temperature.

### Example 4

The activation solution and activation processes are as same as Example 1 and 2. The differences are: the weight units of silica gel are 15 and the deionised water are 25, drop distilled water and stir the mixture at the same time until the value read in Baumé densimeter is 0.85 °Bé, add oxalic acid into the solution until the pH value is 3. As for magnetization, the dc magnetic field is 6000 Gauss and the magnetization time is 6 minutes. As for the thickness of the plate, the frame part at negative plate is 30% thicker than the comby part within the frame and the frame part at positive plate is 50% thicker than the comby part within the frame. The immersion time is 12 hours.

The activation is performed by an "uc-KGCFD 2 economic-type 40 channels charger" for 50 hours at 2.07 V at room temperature.

## Claims

1. A liquid low concentration sodium-containing silicate solution as activation solution for lead-acid storage battery, such a solution is obtained by a magnetization technology as following steps:
(1) Take a silica gel containing 40 to 60 wt% SiO₂, the weight units of such a gel are 5 to 15;
(2) Add water into said silica gel and stir the mixture at the same time, the weight units of water are 15 to 25. Add water until the concentration is 0.65 to 0.85 °Bé measured by Baumé densimeter;
(3) Add inorganic acid into the solution mentioned in Step (2) until pH value is 1-4 to obtain a silicate mixture;
(4) Put said silicate mixture obtained in Step (3) into a magnetic field of 1000-6000 Gauss for 5-10 minutes magnetization to obtain a magnetized mixture;
(5) Stir magnetized mixture obtained in Step (4) until the viscosity of the above mixture is less than 0.02 poise.

2. A liquid low concentration sodium-containing silicate solution as activation solution for lead-acid storage battery as obtained in Claim 1, wherein the water is deionised water or distilled water.

3. A liquid low concentration sodium-containing silicate solution as activation solution for lead-acid storage battery as defined in Claim 1, wherein the inorganic acid is hydrochloric acid, oxalic acid, sulphuric acid;

4. A liquid low concentration sodium-containing silicate solution as activation solution for lead-acid storage battery as defined in Claim 1, wherein the stirring means mechanical stirring, the speed is 700 to 1400 r/m, time is 5 to 10 minutes.

5. A liquid low concentration sodium-containing silicate solution as activation solution for lead-acid storage battery as defined in Claim 1, wherein the magnetic field is performed by a round tube made by NdFeB with a 1000-6000 Gauss magnetic intensity.

6. An internal activation method using the liquid low concentration sodium-containing silicate solution as defined in Claim 1, including the following steps:
a. Preparation of plate firstly: made a hexagonal comby plate by lead or lead alloy, the size should be matched with the shell of the batteries, the frame part at negative electrode is 20%-60% thicker than the comby part within the frame while the frame part at positive plate is 30%-80% thicker than the comby part within the frame; b. Paste diachylon on plate, the composition of the diachylon for the positive plate contains lead powder 100 kg, graphite 500 g, short-fibre paper 50 g, sulphuric acid 12.26 kg and water 14 kg. The density of the diachylon is 4.2 g/cm³. The diachylon for the negative plate of present invention is composed of lead powder 100 kg, Barium sulphate 500 g, short-fibre paper 50 g, sulphuric acid 8.19 kg and water 14 kg.
The density of the diachylon is 4.3 g/cm .
c. Put the inactivated positive and negative plates obtained into the battery shell. Inside space of the battery shell is separated uniformly into small units by inner wall. Every unit is a 2 V cell. Positive and negative plates are placed in alternation, a separator is sandwiched between positive and negative plates. No space is kept between neighbouring plates. The lead lines for all positive electrodes or negative electrodes are put in one side, respectively. In each cell unit the positive plates or negative plates are connected together in parallel through current collector plates, respectively. Each cell unit is in series with each other through connection junction, the connection of plate, junction and current collector plate are as same as usual. After connection, put a cap on the battery and seal each unit using epoxy resins. Ventilation between each unit should be avoided;
d. Fill the activation solution as defined in Claim 1-5 into each unit, the whole battery inside the shell should be filled up with activation solution. Except the lead lines on the plates, the rest parts are immersed in the solution for 12-24 hours;
e. Use an automatic charger to perform electrochemical activation at room temperature for 30-50 hours.

7. An internal activation method using liquid low concentration sodium-containing silicate solution as defined in Claim 1, wherein the automatic charger is an "uc-KGCFD2 computer control activation charger" or "uc-KGCFD2-economic type 40 channels charger".

8. An internal activation method using liquid low concentration sodium-containing silicate solution as defined in Claim 6, wherein the optimized voltage for activation is 2.07-2.6 V and time is 48 hour.
